# EUROPEAN PATENT SPECIFICATION

(11) **EP 4 537 713 B1**
(45) Date of publication and mention of the grant of the patent: **29.04.2026**
(21) Application number: 24205266.0
(22) Date of filing: 08.10.2024
(51) Int. Cl.: A47J 27/10, A47J 37/06, A47J 44/00, B65B 31/04, B65B 51/14, A47J 27/04, B65B 25/06

(54) **MULTIFUNCTIONAL COOKING DEVICE**
MULTIFUNKTIONALE KOCHVORRICHTUNG
DISPOSITIF DE CUISSON MULTIFONCTION

(30) Priority: 14.10.2023 CN 202311332578
(43) Date of publication of application: 16.04.2025
(73) Proprietor: Ningbo Careline Electric Appliance Co., Ltd., Ningbo, Zhejiang 315000 (CN)
(72) Inventor: ZHANG, Yichi, Ningbo, Zhejiang (CN); PAN, Huayuan, Ningbo, Zhejiang (CN); BAI, Rongjie, Ningbo, Zhejiang (CN); LIANG, Jiahe, Ningbo, Zhejiang (CN)
(74) Representative: Meyer-Dulheuer MD Legal Patentanwälte PartG mbB

(56) References cited:
- EP-A1- 1 433 719
- CN-A- 107 647 768
- CN-U- 218 164 861

## Description

### TECHNICAL FIELD

The present invention relates to the field of kitchen appliances, and in particular to a multifunctional cooking device.

### BACKGROUND

As people's living standards continue to improve, steak has become a favorite food for many. However, the existing steak cooking devices not only have relatively limited functions, but also produce steak with poor taste during cooking, resulting in poor user experience.

CN 107 647 768 A discloses an multifunctional breakfast machine, comprising a breakfast machine body, provided with a stewing mechanism and a decocting baking mechanism that are arranged in the breakfast machine body in a superposed mode; the breakfast machine body also comprises a milk warming mechanism arranged on the top face of the decocting baking mechanism; the stewing mechanism is of a pot-type stewing structure, the decocting baking mechanism is of a disc-clamping decocting baking structure, and the milk warming mechanism is of a groove-type heating structure.

### SUMMARY

The present application provides a multifunctional cooking device to solve the technical problems of the existing steak cooking devices, which have limited functions and poor user experience.

In order to solve the above technical problem, the present invention provides a multifunctional cooking device, including: a machine base; a packaging mechanism, arranged on a front portion of the machine base, the packaging mechanism including a packaging opening for inserting a food bag and a sealing machine arranged in the packaging opening for sealing the food bag, the packaging opening being disposed at a front side of the machine base; a steaming and boiling mechanism, arranged on a rear portion of the machine base, the steaming and boiling mechanism including a steaming and boiling cavity for placing food and a heating assembly for heating the steaming and boiling cavity; and a frying and grilling mechanism, arranged on the upper portion of the machine base and positioned above the steaming and boiling mechanism, the frying and grilling mechanism including an upper frying and grilling pan and a lower frying and grilling pan that cooperate with each other, forming a frying and grilling cavity between the upper frying and grilling pan and the lower frying and grilling pan for placing food; the steaming and boiling cavity is an open-top structure, the bottom of the frying and grilling mechanism matches an open top of the steaming and boiling cavity, the frying and grilling mechanism is movably positioned above the steaming and boiling cavity, and the frying and grilling mechanism is movable to open or close the open top of the steaming and boiling cavity. In this application, by integrating the functional modules of the packaging mechanism, the steaming and boiling mechanism, and the frying and grilling mechanism into a whole, the multifunctional cooking device enables the sequential completion of sealing, packaging, constant-temperature steaming and boiling, heating, and rapid frying and grilling of food to be cooked, such as steak, and food which is fresh and tender in taste and rich in nutrition can be made. The functions of the cooking device can be enriched, and the user experience is greatly improved.

In an alternative embodiment, the packaging mechanism further includes a vacuum machine, the vacuum machine being located within the packaging opening, the vacuum machine being used for vacuumizing the food bag before the sealing machine seals the food bag. Using the vacuum machine to evacuate air from the food bag can not only improve the heating efficiency of the food during heating by the steaming and boiling mechanism, but also reduce the contact between the food and air, thereby preventing food spoilage.

In an alternative embodiment, the packaging mechanism further includes a packaging base, the packaging base being detachably arranged on the machine base, a gap is provided between an upper side of the package base and the machine base to form the packaging opening. The detachable design of the packaging base not only facilitates easy removal, cleaning, and maintenance, but also significantly enhances the practicality of the product and user experience.

In an alternative embodiment, the steaming and boiling mechanism further includes a food holder, the food holder being detachably arranged in the steaming and boiling cavity. By using the food holder to support the food during steaming and boiling, it not only allows the food to be heated from multiple directions, but also improves heating efficiency. Additionally, it facilitates the easy placement and removal of food from the steaming and boiling cavity.

In an alternative embodiment, the steaming and boiling mechanism further includes a stirring assembly, the stirring assembly including a drive motor and a stirring head connected to the drive motor, the stirring head being arranged in the steaming and boiling cavity. By installing the stirring head within the steaming and boiling cavity, it is possible to stir the heating medium within the steaming and boiling cavity, allowing for a more even distribution of temperature within the heating medium in the steaming and boiling cavity, thus achieving more uniform and efficient heating of food.

In the multifunctional cooking device, the frying and grilling mechanism not only serves the purpose of frying and grilling food, but also functions as the door for the steaming and boiling cavity of the steaming and boiling mechanism. This effectively simplifies the overall structure of the multifunctional cooking device, enhances product integration, and reduces production costs.

In an alternative embodiment, the frying and grilling mechanism is hinged to the upper portion of the machine base, the frying and grilling mechanism closes the open top of the steaming and boiling cavity when the frying and grilling mechanism is rotated to be close to the steaming and boiling cavity; the frying and grilling mechanism opens the open top of the steaming and boiling cavity when the frying and grilling mechanism is rotated away from the steaming and boiling cavity. By hinging the frying and grilling mechanism to the upper portion of the machine base, it not only allows for the opening and closing of the open top of the steaming and boiling cavity, but also makes the process of opening and closing the open top simple and convenient, effectively simplifying the overall structure of the multifunctional cooking device.

In an alternative embodiment, the frying and grilling mechanism further includes a base and a cover, the lower frying and grilling pan is disposed on an upper side of the base, the upper frying and grilling pan is disposed on a lower side of the cover, one side of the cover is hinged to the base, the base is hinged to the upper portion of the machine base, the bottom of the base matches the open top of the steaming and boiling cavity, when the base is rotated to be close to the steaming and boiling cavity, the base closes the open top of the steaming and boiling cavity; when the base is rotated away from the steaming and boiling cavity, the base opens the open top of the steaming and boiling cavity. The hinged connection between the cover and the base allows for flipping to open and close the frying and grilling mechanism, making it convenient to place and remove food for frying and grilling. Additionally, by hinging the base to the upper portion of the machine base, the steaming and boiling cavity of the steaming and boiling mechanism can be opened and closed by flipping the base, which not only enhances operational convenience but also improves product practicality.

In an alternative embodiment, the multifunctional cooking device also includes a control mechanism installed on the machine base, and the control mechanism includes a control board and an operation panel electrically connected to the control board, the control board being electrically connected to the packaging mechanism, the steaming and boiling mechanism, and the frying and grilling mechanism, respectively. By using the unified control board to control the packaging mechanism, the steaming and boiling mechanism, and the frying and grilling mechanism, it not only simplifies the product structure but also enhances the integration of product structure and control. Furthermore, by establishing interconnections between the various functional modules, intelligent correlated control can be achieved, thereby enhancing the user experience.

In an alternative embodiment, the operation panel is arranged on the front portion of the machine base, and is located above the packaging mechanism. Positioning the control board on the front portion of the machine base not only facilitates user operation but also maximizes the space utilization on the machine base, thereby enhancing the practicality of the product.

The beneficial effects of the present application compared to the prior art are:
By integrating the packaging mechanism, the steaming and boiling mechanism, and the frying and grilling mechanism into a single cooking device, this application enables the sequential completion of sealing, packaging, constant-temperature steaming and boiling, heating, and rapid frying and grilling of food to be cooked, such as steak, and food which is fresh and tender in taste and rich in nutrition can be made. The functions of the cooking device can be enriched, and the user experience is greatly improved.

### BRIEF DESCRIPTION OF THE DRAWINGS

FIG. 1 is a schematic diagram illustrating the overall structure of a multifunctional cooking device according to the present invention.
FIG. 2 is a schematic diagram illustrating a frying and grilling mechanism of the multifunctional cooking device in an open state according to the present invention.
FIG. 3 is a schematic diagram illustrating a steaming and boiling mechanism of the multifunctional cooking device in an open state according to the present invention.
FIG. 4 is a cross-sectional view of the multifunctional cooking device according to the present invention.
FIG. 5 is a schematic diagram illustrating the removal of a packaging base from the multifunctional cooking device according to the present invention.

### DETAILED DESCRIPTION

The following description is used to disclose the present invention to enable those skilled in the art to practice the invention. Preferred embodiments in the following description are given by way of example only, and other obvious variations will occur to those skilled in the art.

It should be noted that the terminology used herein is for the purpose of describing particular implementations only and is not intended to be limiting of exemplary implementations according to the present application. As used herein, the singular forms are intended to include the plural forms as well, unless the context clearly indicates otherwise. Furthermore, it should be understood that the terms "comprises" and/or "comprising", when used in this specification, specify the presence of features, steps, operations, devices, components, and/or combinations thereof.

Relative arrangements of components and steps, numerical expressions, and numerical values set forth in these examples do not limit the scope of the invention unless specifically stated otherwise. Also, it should be understood that, for convenience of description, the dimensions of the various parts shown in the drawings are not drawn to actual scale. Techniques, methods, and apparatus known to those of ordinary skill in the relevant art may not be discussed in detail, but where appropriate, should be considered part of the authorized specification. In all of the examples shown and discussed herein, any specific values should be interpreted as merely exemplary, and not as limitations. Accordingly, other examples of exemplary embodiments may have different values. It should be noted that like reference numerals and letters denote like items in the following figures, and therefore, once an item is defined in one figure, it need not be further discussed in subsequent figures.

In the description of the present invention, it should be understood that the orientation or positional relationships indicated by the orientation words such as "front, back, up, down, left, right", "horizontal, vertical, perpendicular, level" and "top, bottom" are generally based on the orientation or positional relationships shown in the accompanying drawings only for the convenience and simplification of the description of the present invention, unless otherwise stated, these orientation words do not indicate and imply that the referred device or element must have a specific orientation or be constructed and operated in a specific orientation, and therefore cannot be understood as a limitation of the scope of protection of the present invention. The positional words "inside and outside" refer to the inside and outside with respect to the contour of each component itself.

For ease of description, spatially relative terms, such as "over", "above", "on an upper surface", "upper", and the like, may be used herein to describe spatial positional relationships of one device or feature to other devices or features as illustrated in the figures. It should be understood that the spatially relative terms are intended to encompass different orientations of the device in use or operation in addition to the orientation depicted in the figures. For example, if the devices in the figures are inverted, devices described as "above" or "over" other devices or constructions would then be positioned "below" or "beneath" the other devices or constructions. Thus, the exemplary term "above" can encompass both the orientations of "above" and "below". The device may be otherwise variously positioned (rotated 90 degrees or at other orientations), and corresponding interpretations should be made for the spatial relative descriptions used herein.

Further, it needs to be noted that the term "a" should be understood as "at least one" or "one or more", i.e., in one embodiment, the number of an element may be one, while in another embodiment, the number of the element may be one or more, the term "a" should not be understood as a limitation on the number. The use of the terms "first", "second", and the like to define components is merely for the purpose of distinguishing the corresponding components, and without further clarification, these terms do not have any special meaning and should not be interpreted as limiting the scope of protection of the present invention.

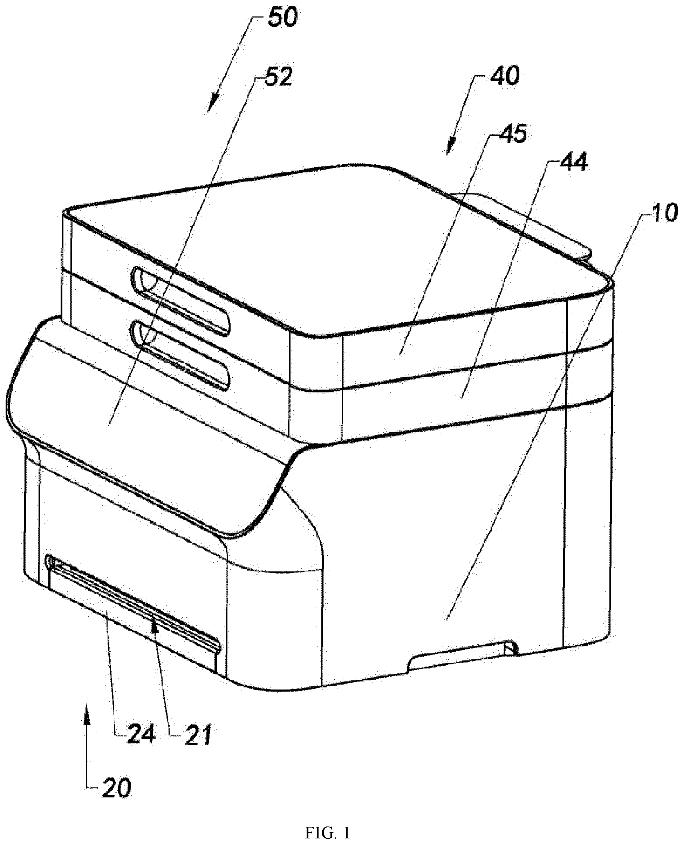

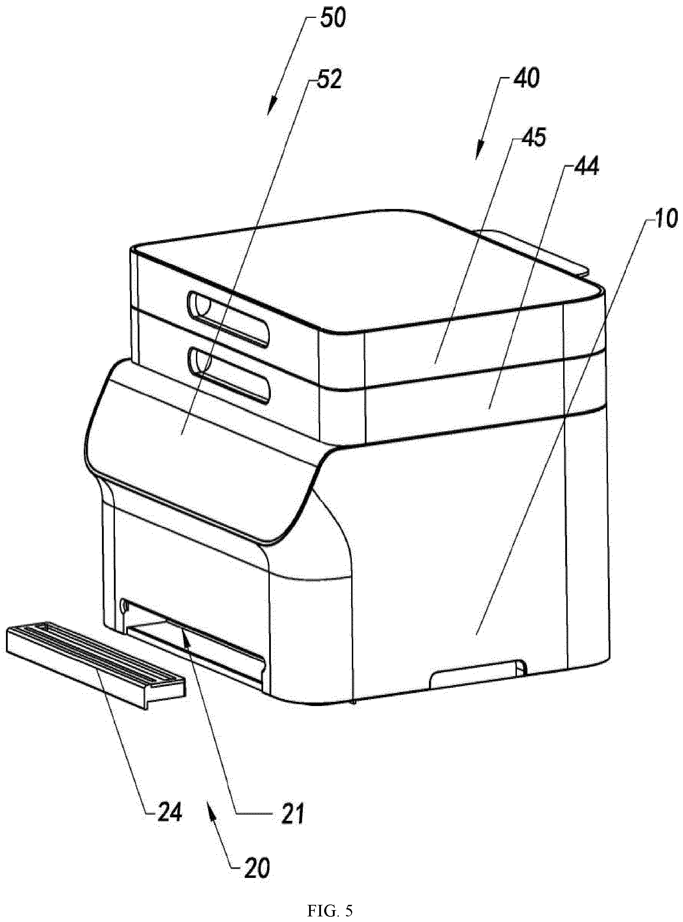

As shown in FIGS. 1 and 5, these are schematic diagrams of a multifunctional cooking device provided by the present invention. The multifunctional cooking device includes a machine base 10 and a packaging mechanism 20 located on the front portion of the machine base 10. The packaging mechanism 20 includes a packaging opening 21 and a sealing machine 22. The packaging opening 21 is preferably located on the front side of the machine base 10, and it is suitable for inserting a food bag. Inside the packaging opening 21, there is the sealing machine 22, which is suitable for sealing the food bag. When in use, the user places the opening of the food bag containing food into the packaging opening 21, allowing the sealing machine 22 inside the packaging opening 21 to seal the opening of the food bag.

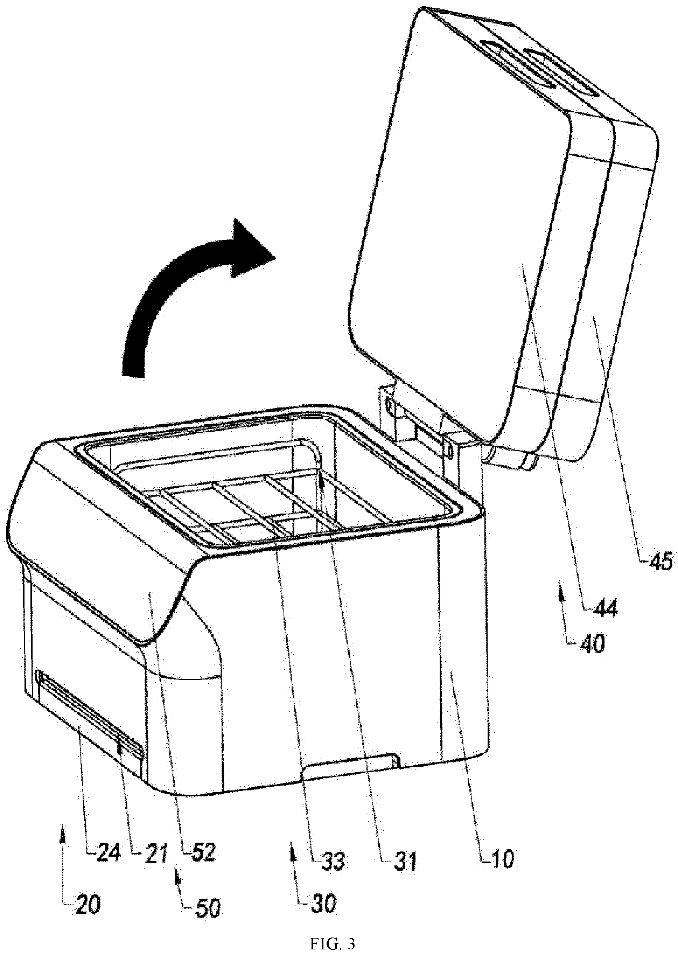

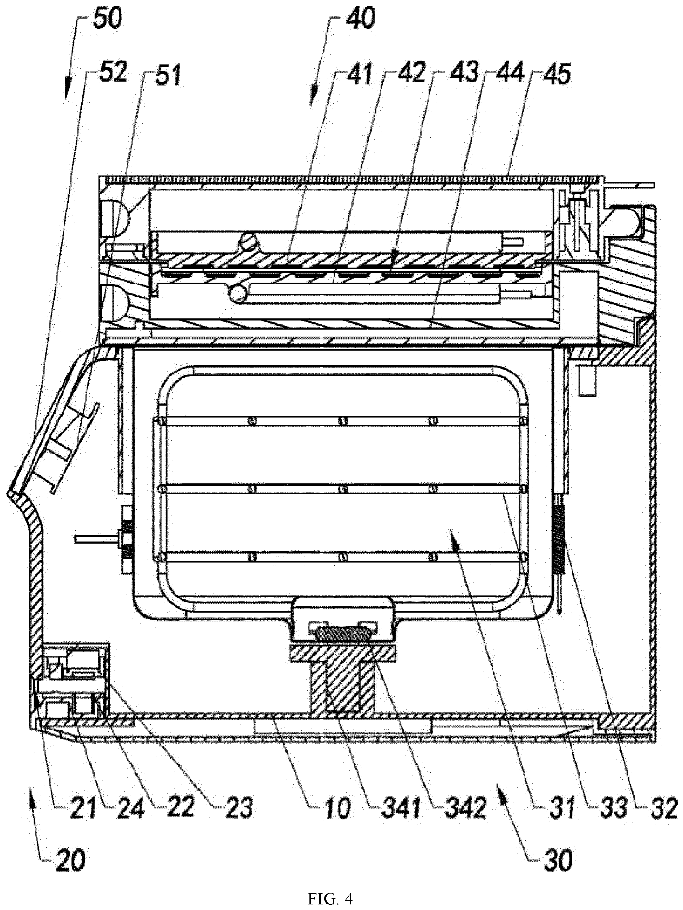

As shown in FIGS. 3 and 4, the rear portion of the machine base 10 is also equipped with a steaming and boiling mechanism 30. The steaming and boiling mechanism 30 includes a steaming and boiling cavity 31 for placing food and a heating assembly 32 for heating the steaming and boiling cavity 31. The steaming and boiling cavity 31 contains a heating medium, and through the heating assembly 32 and the heating medium, constant-temperature steaming and boiling heating can be achieved for the food inside the steaming and boiling cavity 31.

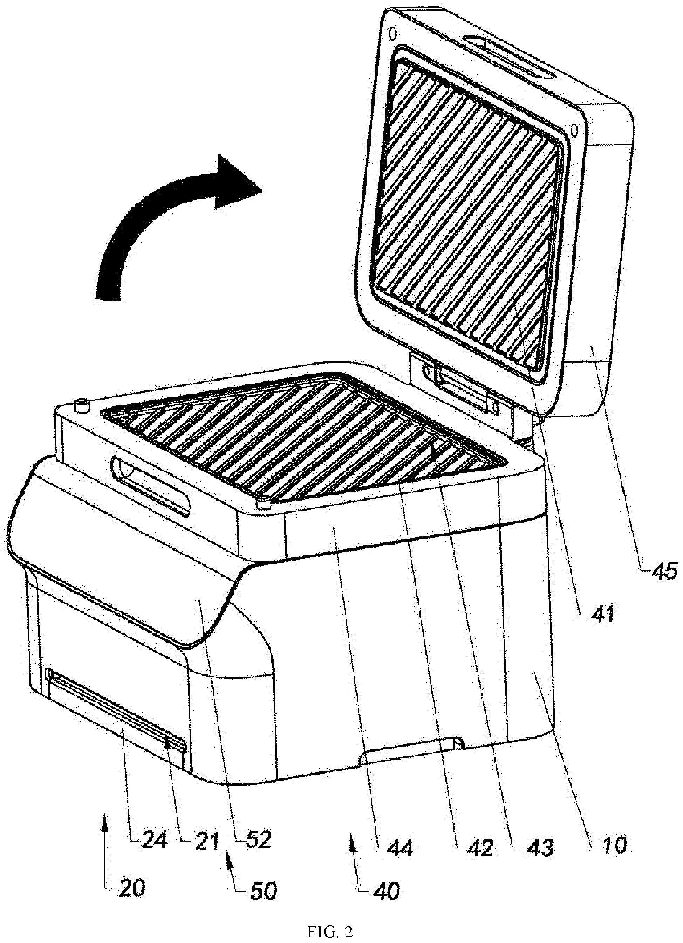

As shown in FIGS. 2 and 4, the upper portion of the machine base 10 is also provided with a frying and grilling mechanism 40, which is located above the steaming and boiling mechanism 30. The frying and grilling mechanism 40 includes an upper frying and grilling pan 41 and a lower frying and grilling pan 42 that cooperate with each other, which form a frying and grilling cavity 43 for placing food between them. Through the upper frying and grilling pan 41 and the lower frying and grilling pan 42 that cooperate with each other, not only can simultaneous heating of the top and bottom surfaces of the food in the frying and grilling cavity 43 be achieved, but heating efficiency can also be effectively improved, thereby enhancing cooking results and cooking efficiency.

As shown in FIGS. 1 to 5, in this application, the multifunctional cooking device integrates the functional modules of the packaging mechanism 20, the steaming and boiling mechanism 30, and the frying and grilling mechanism 40 into one unit. This application enables the sequential completion of sealing, packaging, constant-temperature steaming and boiling, heating, and rapid frying and grilling of food to be cooked, such as steak, and food which is fresh and tender in taste and rich in nutrition can be made. The functions of the cooking device can be enriched, and the user experience is greatly improved.

As shown in FIG. 4, the packaging mechanism 20 further includes a vacuum machine 23 located inside the packaging opening 21. The vacuum machine 23 is suitable for evacuating air from the food bag. When using the multifunctional cooking device, it is suitable to first insert the opening of the food bag into the packaging opening 21 and evacuate air from the food bag using the vacuum machine 23, and then seal the evacuated food bag using the sealing machine 22. By evacuating air from the food bag with the vacuum machine 23, it not only enhances the heating efficiency when the food is heated by the steaming and boiling mechanism 30 but also reduces the contact between the food and air, thereby preventing food spoilage.

As shown in FIGS. 4 and 5, the packaging mechanism 20 also includes a packaging base 24. The packaging base 24 is preferably detachably mounted on the machine base 10, and a gap is provided between an upper side of the package base 24 and the machine base 10 to form the packaging opening 21. By designing the packaging base 24 as a detachable structure, it not only facilitates easy removal for cleaning and maintenance but also significantly enhances the practicality of the product and the user experience.

As shown in FIGS. 3 and 4, the steaming and boiling mechanism 30 further includes a food holder 33, which is preferably detachably installed in the steaming and boiling cavity 31. By using the food holder 33 to support the food being steamed and boiled, it not only enables multi-directional heating of the food but also enhances heating efficiency. Additionally, it facilitates the placement and removal of food from the steaming and boiling cavity 31.

As shown in FIG. 4, the steaming and boiling mechanism 30 also includes a stirring assembly 34, which includes a drive motor 341 and a stirring head 342 connected to the drive motor 341. The stirring head 342 is positioned inside the steaming and boiling cavity 31. By installing the stirring head 342 inside the steaming and boiling cavity 31, it can stir the heating medium in the steaming and boiling cavity 31, allowing for a more even distribution of temperature within the heating medium in the steaming and boiling cavity 31, thus achieving more uniform and efficient heating of food.

As shown in FIGS. 3 and 4, in an alternative embodiment, the steaming and boiling cavity 31 has an open-top structure, and the bottom of the frying and grilling mechanism 40 is matched with the open top of the steaming and boiling cavity 31. The frying and grilling mechanism 40 is movably installed above the steaming and boiling cavity 31, allowing it to move to open or close the open top of the steaming and boiling cavity 31. In this multifunctional cooking device, the frying and grilling mechanism 40 is not only used for frying and grilling food but also serves as the door for the steaming and boiling cavity 31 of the steaming and boiling mechanism 30. This effectively simplifies the overall structure of the multifunctional cooking device, enhances the integration of the product, and reduces production costs.

As shown in FIGS. 1 and 3, the frying and grilling mechanism 40 is preferably hinged to the upper portion of the machine base 10, the frying and grilling mechanism 40 is suitable for closing the open top of the steaming and boiling cavity 31 when the frying and grilling mechanism 40 is rotated to be close to the steaming and boiling cavity 31; the frying and grilling mechanism 40 is suitable for opening the open top of the steaming and boiling cavity 31 when the frying and grilling mechanism 40 is rotated away from the steaming and boiling cavity 31. By hinging the frying and grilling mechanism 40 to the upper portion of the machine base 10, it not only allows for the opening and closing of the open top of the steaming and boiling cavity 31, but also makes the process of opening and closing the open top 31 simple and convenient, effectively simplifying the overall structure of the multifunctional cooking device.

As shown in FIGS. 2 to 4, in an alternative embodiment, the frying and grilling mechanism 40 further includes a base 44 and a cover 45, the lower frying and grilling pan 42 is disposed on an upper side of the base 44, the upper frying and grilling pan 41 is disposed on a lower side of the cover 45, one side of the cover 45 is hinged to the base 44, the base 44 is hinged to the upper portion of the machine base 10, the bottom of the base 44 matches the open top of the steaming and boiling cavity 31, when the base 44 is rotated to be close to the steaming and boiling cavity 31, the base 44 closes the open top of the steaming and boiling cavity 31; when the base 44 is rotated away from the steaming and boiling cavity 31, the base 44 opens the open top of the steaming and boiling cavity 31. The hinged connection between the cover 45 and the base 44 allows for flipping to open and close the frying and grilling mechanism 40, making it convenient to place and remove food for frying and grilling. Additionally, by hinging the base 44 to the upper portion of the machine base 10, the steaming and boiling cavity 31 of the steaming and boiling mechanism 30 can be opened and closed by flipping the base 44, which not only enhances operational convenience but also improves product practicality.

As shown in FIG. 4, in an alternative embodiment, the multifunctional cooking device also includes a control mechanism 50 installed on the machine base 10, and the control mechanism 50 includes a control board 51 and an operation panel 52 electrically connected to the control board 51, the control board 51 being electrically connected to the packaging mechanism 20, the steaming and boiling mechanism 30, and the frying and grilling mechanism 40, respectively. By using the unified control board 51 to control the packaging mechanism 20, the steaming and boiling mechanism 30, and the frying and grilling mechanism 40, it not only simplifies the product structure but also enhances the integration of product structure and control. Furthermore, by establishing interconnections between the various functional modules, intelligent correlated control can be achieved, thereby enhancing the user experience.

As shown in FIGS. 1 to 5, in an alternative embodiment, the operation panel 52 is preferably arranged on the front portion of the machine base 10, and is located above the packaging mechanism 20. Positioning the control board 52 on the front portion of the machine base 10 not only facilitates user operation but also maximizes the space utilization on the machine base 10, thereby enhancing the practicality of the product.

The above is a further detailed description of the present invention in conjunction with specific preferred embodiments, and the objects of the present invention have been completely and effectively achieved, and it will be understood by those skilled in the art that the embodiments of the present invention shown in the foregoing description and the accompanying drawings are by way of example only and do not limit the present invention.

## Claims

1. A multifunctional cooking device, comprising:
a machine base (10);
a packaging mechanism (20), arranged on a front portion of the machine base, the packaging mechanism comprising a packaging opening (21) for inserting a food bag and a sealing machine (22) arranged in the packaging opening for sealing the food bag, the packaging opening being disposed at a front side of the machine base;
a steaming and boiling mechanism (30), arranged on a rear portion of the machine base, the steaming and boiling mechanism comprising a steaming and boiling cavity (31) for placing food and a heating assembly (32) for heating the steaming and boiling cavity; and
a frying and grilling mechanism (40), arranged on the upper portion of the machine base and positioned above the steaming and boiling mechanism, the frying and grilling mechanism comprising an upper frying and grilling pan (41) and a lower frying and grilling pan (42) that cooperate with each other, forming a frying and grilling cavity between the upper frying and grilling pan and the lower frying and grilling pan for placing food,
**characterized in that** the steaming and boiling cavity is an open-top structure, the bottom of the frying and grilling mechanism matches an open top of the steaming and boiling cavity, the frying and grilling mechanism is movably positioned above the steaming and boiling cavity, and the frying and grilling mechanism is movable to open or close the open top of the steaming and boiling cavity.

2. The multifunctional cooking device according to claim 1, **characterized in that** the packaging mechanism (21) further comprises a vacuum machine (23), the vacuum machine being located within the packaging opening, the vacuum machine being used for vacuumizing the food bag before the sealing machine (22) seals the food bag.

3. The multifunctional cooking device according to claim 2, **characterized in that** the packaging mechanism (20) further comprises a packaging base (24), the packaging base being detachably arranged on the machine base, a gap is provided between an upper side of the package base and the machine base to form the packaging opening.

4. The multifunctional cooking device according to claim 1, **characterized in that** the steaming and boiling mechanism (30) further comprises a food holder (33), the food holder being detachably arranged in the steaming and boiling cavity (31).

5. The multifunctional cooking device according to claim 4, **characterized in that** the steaming and boiling mechanism (30) further comprises a stirring assembly (34), the stirring assembly comprising a drive motor (341) and a stirring head (342) connected to the drive motor, the stirring head being arranged in the steaming and boiling cavity (31).

6. The multifunctional cooking device according to claim 1, **characterized in that** the frying and grilling mechanism is hinged to the upper portion of the machine base, the frying and grilling mechanism closes the open top of the steaming and boiling cavity when the frying and grilling mechanism is rotated to be close to the steaming and boiling cavity; the frying and grilling mechanism opens the open top of the steaming and boiling cavity when the frying and grilling mechanism is rotated away from the steaming and boiling cavity.

7. The multifunctional cooking device according to claim 6, **characterized in that** the frying and grilling mechanism further comprises a base and a cover, the lower frying and grilling pan (42) is disposed on an upper side of the base, the upper frying and grilling pan (41) is disposed on a lower side of the cover, one side of the cover is hinged to the base, the base is hinged to the upper portion of the machine base, the bottom of the base matches the open top of the steaming and boiling cavity (31), when the base is rotated to be close to the steaming and boiling cavity, the base closes the open top of the steaming and boiling cavity; when the base is rotated away from the steaming and boiling cavity, the base opens the open top of the steaming and boiling cavity.

8. The multifunctional cooking device according to any one of claims 1-7, **characterized in that** the multifunctional cooking device also comprises a control mechanism (50) installed on the machine base, and the control mechanism comprises a control board (51) and an operation panel (52) electrically connected to the control board, the control board being electrically connected to the packaging mechanism, the steaming and boiling mechanism, and the frying and grilling mechanism, respectively.

9. The multifunctional cooking device according to claim 8, **characterized in that** the operation panel is arranged on the front portion of the machine base, and is located above the packaging mechanism.

## Patentansprüche

1. Multifunktionelle Kochvorrichtung, umfassend:
eine Maschinenbasis (10);
einen Verpackungsmechanismus (20), der an einem vorderen Abschnitt der Maschinenbasis angeordnet ist, wobei der Verpackungsmechanismus eine Verpackungsöffnung (21) zum Einführen eines Lebensmittelbeutels und eine in der Verpackungsöffnung angeordnete Versiegelungsmaschine (22) zum Verschließen des Lebensmittelbeutels umfasst, wobei die Verpackungsöffnung an einer Vorderseite der Maschinenbasis angeordnet ist;
einen Dämpf- und Kochmechanismus (30), der auf einem hinteren Abschnitt der Maschinenbasis angeordnet ist, wobei der Dämpf- und Kochmechanismus eine Dämpf- und Kochkammer (31) zum Aufnehmen von Lebensmitteln und eine Heizbaugruppe (32) zum Beheizen der Dämpf- und Kochkammer umfasst; und
einen Brat- und Grillmechanismus (40), der am oberen Abschnitt der Maschinenbasis angeordnet und oberhalb des Dämpf- und Kochmechanismus positioniert ist, wobei der Brat- und Grillmechanismus eine obere Brat- und Grillpfanne (41) und eine untere Brat- und Grillpfanne (42) umfasst, die miteinander zusammenwirken und zwischen der oberen Brat- und Grillpfanne und der unteren Brat- und Grillpfanne eine Brat- und Grillkammer zur Aufnahme von Lebensmitteln bilden,
**dadurch gekennzeichnet, dass** die Dämpf- und Kochkammer eine nach oben offene Struktur aufweist, dass ein Boden des Brat- und Grillmechanismus an eine offene Oberseite der Dämpf- und Kochkammer angepasst ist, dass der Brat- und Grillmechanismus beweglich oberhalb der Dämpf- und Kochkammer positioniert ist und dass der Brat- und Grillmechanismus beweglich ist, um die offene Oberseite der Dämpf- und Kochkammer zu öffnen oder zu schließen.

2. Multifunktionelle Kochvorrichtung nach Anspruch 1, **dadurch gekennzeichnet, dass** der Verpackungsmechanismus (21) ferner eine Vakuummaschine (23) umfasst, wobei sich die Vakuummaschine innerhalb der Verpackungsöffnung befindet und die Vakuummaschine dazu dient, den Lebensmittelbeutel zu vakuumieren, bevor die Versiegelungsmaschine (22) den Lebensmittelbeutel versiegelt.

3. Multifunktionelle Kochvorrichtung nach Anspruch 2, **dadurch gekennzeichnet, dass** der Verpackungsmechanismus (20) ferner eine Verpackungsbasis (24) umfasst, wobei die Verpackungsbasis abnehmbar auf der Maschinenbasis angeordnet ist, und zwischen einer Oberseite der Verpackungsbasis und der Maschinenbasis ein Spalt vorgesehen ist, um die Verpackungsöffnung zu bilden.

4. Multifunktionelle Kochvorrichtung nach Anspruch 1, **dadurch gekennzeichnet, dass** der Dämpf- und Kochmechanismus (30) ferner einen Lebensmittelhalter (33) umfasst, wobei der Lebensmittelhalter abnehmbar in der Dämpf- und Kochkammer (31) angeordnet ist.

5. Multifunktionelle Kochvorrichtung nach Anspruch 4, **dadurch gekennzeichnet, dass** der Dämpf- und Kochmechanismus (30) ferner eine Rühreinrichtung (34) umfasst, wobei die Rühreinrichtung einen Antriebsmotor (341) und einen mit dem Antriebsmotor verbundenen Rührkopf (342) umfasst, wobei der Rührkopf in der Dämpf- und Kochkammer (31) angeordnet ist.

6. Multifunktionelle Kochvorrichtung nach Anspruch 1, **dadurch gekennzeichnet, dass** der Brat- und Grillmechanismus mit dem oberen Abschnitt der Maschinenbasis scharnierartig verbunden ist, wobei der Brat- und Grillmechanismus die offene Oberseite der Dämpf- und Kochkammer schließt, wenn der Brat- und Grillmechanismus so gedreht wird, dass er sich in der Nähe der Dämpf- und Kochkammer befindet; und wobei der Brat- und Grillmechanismus die offene Oberseite der Dämpf- und Kochkammer öffnet, wenn er von der Dämpf- und Kochkammer weggedreht wird.

7. Multifunktionelle Kochvorrichtung nach Anspruch 6, **dadurch gekennzeichnet, dass** der Brat- und Grillmechanismus ferner eine Basis und eine Abdeckung umfasst, wobei die untere Brat- und Grillpfanne (42) an einer Oberseite der Basis angeordnet ist, wobei die obere Brat- und Grillpfanne (41) an einer Unterseite der Abdeckung angeordnet ist, wobei eine Seite der Abdeckung mit der Basis scharnierartig verbunden ist, wobei die Basis mit dem oberen Abschnitt der Maschinenbasis scharnierartig verbunden ist, und wobei ein Boden der Basis an die offene Oberseite der Dämpf- und Kochkammer (31) angepasst ist, wobei die Basis die offene Oberseite der Dämpf- und Kochkammer schließt, wenn die Basis so gedreht wird, dass sie sich in der Nähe der Dämpf- und Kochkammer befindet; und wobei die Basis die offene Oberseite der Dämpf- und Kochkammer öffnet, wenn sie von der Dämpf- und Kochkammer weggedreht wird.

8. Multifunktionelle Kochvorrichtung nach einem der Ansprüche 1 bis 7, **dadurch gekennzeichnet, dass** die Multifunktionelle Kochvorrichtung ferner einen auf der Maschinenbasis installierten Steuermechanismus (50) umfasst, wobei der Steuermechanismus eine Steuerungsplatine (51) und ein mit der Steuerungsplatine elektrisch verbundenes Bedienfeld (52) umfasst, und wobei die Steuerungsplatine jeweils elektrisch mit dem Verpackungsmechanismus, dem Dämpf- und Kochmechanismus sowie dem Brat- und Grillmechanismus verbunden ist.

9. Multifunktionelle Kochvorrichtung nach Anspruch 8, **dadurch gekennzeichnet, dass** das Bedienfeld am vorderen Abschnitt der Maschinenbasis angeordnet ist und sich oberhalb des Verpackungsmechanismus befindet.

## Revendications

1. Dispositif de cuisson multifonction, comprenant :
une base de machine (10) ;
un mécanisme d'emballage (20), agencé sur une partie avant de la base de machine, le mécanisme d'emballage comprenant une ouverture d'emballage (21) pour insérer un sac alimentaire et une machine à sceller (22) agencée dans l'ouverture d'emballage pour sceller le sac alimentaire, l'ouverture d'emballage étant disposée sur un côté avant de la base de machine ;
un mécanisme de cuisson à la vapeur et à l'eau bouillante (30), agencé sur une partie arrière de la base de machine, le mécanisme de cuisson à la vapeur et à l'eau bouillante comprenant une cavité de cuisson à la vapeur et à l'eau bouillante (31) pour placer les aliments et un ensemble de chauffage (32) pour chauffer la cavité de cuisson à la vapeur et à l'eau bouillante ; et
un mécanisme de friture et de grillade (40), agencé sur la partie supérieure de la base de machine et positionné au-dessus du mécanisme de cuisson à la vapeur et à l'eau bouillante, le mécanisme de friture et de grillade comprenant un plat de friture et de grillade supérieur (41) et un plat de friture et de grillade inférieur (42) qui coopèrent l'un avec l'autre, formant une cavité de friture et de grillade entre le plat de friture et de grillade supérieur et le plat de friture et de grillade inférieur pour placer les aliments,
**caractérisé en ce que** la cavité de cuisson à la vapeur et à l'eau bouillante est une structure à haut ouvert, le fond du mécanisme de friture et de grillade correspond à un haut ouvert de la cavité de cuisson à la vapeur et à l'eau bouillante, le mécanisme de friture et de grillade est positionné de manière mobile au-dessus de la cavité de cuisson à la vapeur et à l'eau bouillante, et le mécanisme de friture et de grillade est mobile pour ouvrir ou fermer le haut ouvert de la cavité de cuisson à la vapeur et à l'eau bouillante.

2. Dispositif de cuisson multifonction selon la revendication 1, **caractérisé en ce que** le mécanisme d'emballage (21) comprend en outre une machine à vide (23), la machine à vide étant située dans l'ouverture d'emballage, et la machine à vide étant utilisée pour mettre sous vide le sac alimentaire avant que la machine à sceller (22) ne scelle le sac alimentaire.

3. Dispositif de cuisson multifonction selon la revendication 2, **caractérisé en ce que** le mécanisme d'emballage (20) comprend en outre une base d'emballage (24), la base d'emballage étant agencée de manière amovible sur la base de machine, un espace est prévu entre un côté supérieur de la base d'emballage et la base de machine pour former l'ouverture d'emballage.

4. Dispositif de cuisson multifonction selon la revendication 1, **caractérisé en ce que** le mécanisme de cuisson à la vapeur et à l'eau bouillante (30) comprend en outre un porte-aliments (33), le porte-aliments étant agencé de manière amovible dans la cavité de cuisson à la vapeur et à l'eau bouillante (31).

5. Dispositif de cuisson multifonction selon la revendication 4, **caractérisé en ce que** le mécanisme de cuisson à la vapeur et à l'eau bouillante (30) comprend en outre un ensemble à agiter (34), l'ensemble à agiter comprenant un moteur d'entraînement (341) et une tête à agiter (342) connectée au moteur d'entraînement, et la tête à agiter étant agencée dans la cavité de cuisson à la vapeur et à l'eau bouillante (31).

6. Dispositif de cuisson multifonction selon la revendication 1, **caractérisé en ce que** le mécanisme de friture et de grillade est articulé à la partie supérieure de la base de machine, le mécanisme de friture et de grillade ferme le haut ouvert de la cavité de cuisson à la vapeur et à l'eau bouillante lorsque le mécanisme de friture et de grillade est tourné pour se rapprocher de la cavité de cuisson à la vapeur et à l'eau bouillante ; le mécanisme de friture et de grillade ouvre le haut ouvert de la cavité de cuisson à la vapeur et à l'eau bouillante lorsque le mécanisme de friture et de grillade est tourné pour s'éloigner de la cavité de cuisson à la vapeur et à l'eau bouillante.

7. Dispositif de cuisson multifonction selon la revendication 6, **caractérisé en ce que** le mécanisme de friture et de grillade comprend en outre une base et un couvercle, le plat de friture et de grillade inférieur (42) est disposé sur un côté supérieur de la base, le plat de friture et de grillade supérieur (41) est disposé sur un côté inférieur du couvercle ; un côté du couvercle est articulé à la base, la base est articulée à la partie supérieure de la base de machine, le fond de la base correspond au haut ouvert de la cavité de cuisson à la vapeur et à l'eau bouillante (31), lorsque la base est tournée pour se rapprocher de la cavité de cuisson à la vapeur et à l'eau bouillante, la base ferme le haut ouvert de la cavité de cuisson à la vapeur et à l'eau bouillante ; lorsque la base est tournée pour s'éloigner de la cavité de cuisson à la vapeur et à l'eau bouillante, la base ouvre le haut ouvert de la cavité de cuisson à la vapeur et à l'eau bouillante.

8. Dispositif de cuisson multifonction selon l'une quelconque des revendications 1 à 7, **caractérisé en ce que** le dispositif de cuisson multifonction comprend également un mécanisme de commande (50) installé sur la base de machine, et le mécanisme de commande comprend un panneau de commande (51) et un panneau de manœuvre (52) connecté électriquement au panneau de commande, le panneau de commande étant connecté électriquement au mécanisme d'emballage, au mécanisme de cuisson à la vapeur et à l'eau bouillante, et au mécanisme de friture et de grillade, respectivement.

9. Dispositif de cuisson multifonction selon la revendication 8, **caractérisé en ce que** le panneau de manœuvre est agencé sur la partie avant de la base de machine, et est situé au-dessus du mécanisme d'emballage.
